# EUROPEAN PATENT APPLICATION

(11) **EP 1 881 335 A1**
(43) Date of publication of application: **23.01.2008**
(21) Application number: 06015196.6
(22) Date of filing: 21.07.2006
(51) Int. Cl.: G01S 1/00

(54) **Autonomous low-cost regional navigation satellite system based on geosynchronous eccentric and inclined orbits**

(71) Applicant: GMV, S.A., 28760 Tres Cantos - Madrid (ES)
(72) Inventor: Romay Merino, Miguel M., 28760 Tres Cantos - Madrid (ES); Gavin Alarcon, Angel J., 28760 Tres Cantos - Madrid (ES)
(74) Representative: Carvajal y Urquijo, Isabel

(57) **Abstract**

The present invention refers to an autonomous low-cost regional navigation satellite system for providing a navigation satellite system in a predetermined region, wherein the system comprises:
- at least six satellites in geosynchronous eccentric and inclined orbits,
- said geosynchronous eccentric and inclined orbits having:
- a semi major axis of around 42165 km;
- an eccentricity between 0 and 0.846;
- an inclination between -90 degrees and 90 degrees;
- an argument of perigee between 0 and 360 degrees.

## Description

### Field of the invention

The present invention lies in the field of satellite navigation technology.

### Background of the invention

Satellite navigation systems are either Global Navigation Satellite Systems (GNSS) like GPS, Galileo or GLONASS, or augmentation systems to existing ones like EGNOS, WAAS, MSAS, QZSS, etc. Satellite navigation technology is continuously advancing new possibilities in an increasing number of sectors. Applications that were just a dream few years ago are becoming possible today and the spectrum of potential applications has grown significantly over the last few years. The unprecedented social, economic, technological and environmental benefits to be gained through these applications are becoming very clear.

Global Navigation Satellite Systems are based in constellations of at least 24 satellites. As a relatively high number of satellites is required to provide acceptable performances to users, these systems are relatively expensive to develop and to operate. The modernisation of GPS is going on, but it is progressing slowly; the GLONASS constellation is not completely operational and is still far away from reaching the nominal configuration; Galileo was formally started in 1999 but Europe is still starting the In Orbit Validation Phase. All these delays are clearly demonstrating the complexity associated with the deployment and operation of a GNSS.

Global Navigation Satellite Systems not only require a significant number of satellites in orbit, but also a rather complex ground infrastructure (orbitography and integrity stations, uplink stations, control centres, etc.) world-wide distributed. These systems aim at providing about the same level of performances at all locations on Earth and they do not necessarily provide better performances over dense populated areas.

There are currently two Global Navigation Satellite Systems in orbit:
- The GPS system, which began as a spin-off from the NNSS (TRANSIT) system in the United States back in 1973, is in fact the only fully-functional satellite navigation system. The first satellites were launched in the early eighties and GPS was up and running by the early nineties. Since then the system has been updated periodically and the number of satellites in the constellation has been increased (typically around 28 satellites are permanently in orbit). At present, the GPS system uses a satellite constellation of at least 24 active satellites in intermediate circular orbits. The orbits are aligned so at least four satellites are always within line of sight from almost any place on Earth. There are four active satellites in each of six orbital planes. Each orbit is inclined 55 degrees from the equatorial plane, and the right ascension of the ascending nodes is separated by 60 degrees to provide global coverage. The GPS system has grown in popularity, receiving a particular boost after elimination of the 'Selective Availability' (artificial degradation of the signal). Today it is being used in a vast range of applications.
- The GLONASS system, developed in Russia, launched its first satellite in 1982. The complete system, with the 24 nominal satellites, was working only for a few months. In the second half of the nineties the number of launches was greatly reduced; at one time the system was operating with fewer than 10 satellites. New satellites have been launched in recent years and there are currently about 13 available.

Europe is actually developing its own GNSS, Galileo. Galileo will provide high-precision positioning services guaranteed on a world scale. It will be run under civilian control and will be interoperable with the other navigation systems, GPS and GLONASS. Galileo will also guarantee the availability of the service and inform the users of any satellite anomaly within a few seconds.

The Galileo system is made up of 30 satellites in three orbital planes, each inclined 56 degrees to the Equator, at an altitude of 23,616 km. The constellation has been optimised to maximise the accuracy and availability of the system under conditions of satellite failure.

Several initiatives are actually in progress at regional level to enhance the performances of the current GNSS. Satellite Based Augmentation Systems (SBAS) improve the performances of systems such as GPS and GLONASS, and their main virtue is the fact that it warns users within a few seconds of any malfunctioning of the navigation signal (integrity). Some examples of such systems are:
- WAAS in USA
- EGNOS in Europe
- MSAS in Japan
- GAGAN in India

Some other initiatives, like the Beidou system in China composed by a set of geostationary satellites, aim at providing a certain level of national independence. The Quasi Zenith Satellite System (QZSS) under consideration in Japan is trying to overcome the problem of using geosynchronous satellites when providing augmentations in urban canyons. The QZSS is based in inclined geosynchronous orbits to increase the probability of having one satellite in view under difficult visibility conditions.

To enhance the performances of current systems, mainly GPS, several satellite based augmentation systems have been discussed, most of these systems being based in medium or low earth orbiting satellites or geostationary satellites. These augmentation systems do not aim at providing a navigation service but at enhancing the performances of the existing systems.

US patent US-6, 182,927-B1 discloses a medium earth orbit augmentation of a Global Positioning System for global navigation, which includes at least twelve satellites which reside in a plurality of medium earth orbits, each orbit having a period of at least three sidereal hours and less than one sidereal day, and an inclination angle between 35 and 75 degrees or between 105 and 145 degrees. This US patent provides a system and method for augmenting the existing GPS in order to optimise navigation accuracy.

There is a world-wide growing interest in the development of satellite navigation systems as it is demonstrated by the interest of several countries in participating in the Galileo development. The major rational behind is:
- Increasing the performance of current systems, and or to provide new services.
- Ensuring independence and availability of the system.

However, the cost of a GNSS limits the capability of some countries to develop their own GNSS, and consequently those countries are looking for agreements or analysing the possibility of deploying their own augmentation systems. This situation may change if the development of low cost regional navigation systems became a reality.

At present, regional satellite navigation systems are being designed to optimise performances over the area of interest while trying to minimise space and ground segment costs.

An autonomous regional navigation satellite system is composed by a reduced constellation, typically between 6 and 10 satellites, and a reduced ground segment deployed over the coverage area and maybe neighbour areas.

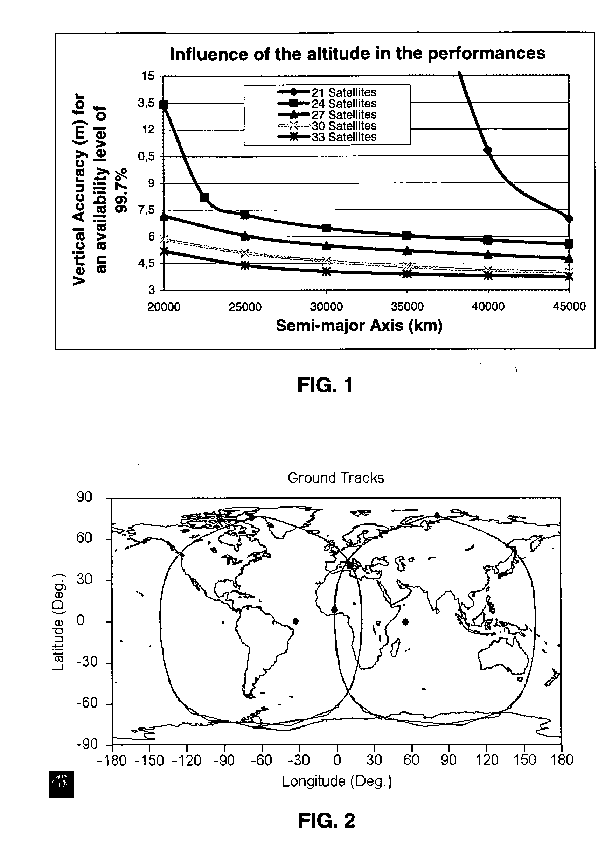

Figure 1 provides an indication of the number of satellites needed for providing navigation performances world-wide. It can be observed that in order to achieve an acceptable level of performance, at least 24 satellites are needed. Performances improve with altitude; this effect decreases with the number of satellites. Figure 1 thus clearly shows that it is not possible to provide accurate positioning services world-wide with a reduced number of satellites, and that at least systems as complex as GPS, GLONASS or Galileo may be needed.

### Summary of the invention

The present invention aims at providing a low-cost regional navigation system based on a constellation of satellites in Geosynchronous Eccentric and Inclined Orbits (GEIO), which provides an entirely independent navigation system with navigation performances comparable to those provided by GNSS, like GPS or Galileo. That is, the navigation system of the present invention is able to operate autonomously over the region of interest, being possible to navigate only with such a regional system without assuming the existence of any other systems like GPS or Galileo.

The invention thus refers to an autonomous low-cost regional navigation system according to claim 1. Preferred embodiments of the system are defined in the dependent claims.

A first aspect of the present invention relates to an autonomous low-cost regional navigation system for providing a navigation satellite system in a predetermined region; the system may comprise some satellites in geostationary orbits to reduce the costs.

According to the invention, the system comprises:
- at least six satellites in geosynchronous eccentric and inclined orbits (GEIO),
- said geosynchronous eccentric and inclined orbits having:
   - a semi major axis of around 42165 km;
   - an eccentricity between 0 and 0.846;
   - an inclination between -90 degrees and 90 degrees;
   - an argument of perigee between 0 and 360 degrees.

According to the invention a low-cost navigation system is achieved: the cost of the space segment is minimised as a very reduced number of satellites is used, even using existing satellites (like GEO satellites). For the satellites in GEIO orbits, mini satellites may be used.

That is, low-cost a regional navigation system which uses geosynchronous eccentric and inclined orbits is proposed in the present invention; the eccentricity, inclination, argument of perigee, number of satellites, number of planes and phasing between the satellites is optimised in each case to provide the best performances over the selected area or region in which the regional navigation system is to be deployed.

The low-cost regional navigation system of the present invention may be interoperable with other systems, allowing improved performances over the regions of interests.

The low cost regional navigation system of the invention does not, in principle, aim at providing integrity or safety critical services. However, should such services be required, they may be provided by complementing the autonomous low-cost regional system of the invention with Satellite Based Augmentation Systems, like EGNOS or WAAS.

The regional navigation system of the invention is preferably configured to use the same signal characteristics and frequencies as existing systems such as GPS, GLONASS and Galileo or any similar or equivalent systems that may be developed in the future; this way, compatibility with existing receivers technology is ensured allowing an easy market penetration, and thereby reducing the user segment costs.

The system is preferably interoperable with other global or regional navigation satellite systems, thereby allowing improved performance over the region of interest.

Indeed, international co-operation may be promoted by transmitting the navigation signals in the same frequencies and with the same characteristics as in current systems.

Said geosynchronous eccentric and inclined orbits GEIO may have an eccentricity between 0.6 and 0.8, an inclination between 60 and 76.5 degrees and an argument of perigee of -90°, and then the resulting system is configured to cover a region essentially comprising Europe.

Or said GEIO orbits may have an eccentricity between 0.6 and 0.8 and an inclination between 60 and 73 degrees, and the resulting system is configured to cover a region essentially comprising Korea.

Or one of said GEIO orbits has an eccentricity between 0.1 and 0.3 and an inclination between 29 and 65 degrees, and the other GEIO orbit has an eccentricity between 0.06 and 0.3 and an inclination between 23.5 and 65 degrees, whereby the resulting system is configured to cover a region essentially comprising Australia and New Zealand.

And a combination of several of these low-cost regional systems may lead to a significant improvement of the performance over relatively large areas.

According to the invention, the ground segment costs are also reduced as:
- A limited number of Ground Stations is needed, due to the regional characteristics of the system.
- The system makes a maximum reuse of Commercial Off-The-Shelf (COTS) tools for the development of the Ground Control Centre.
- It removes all criticality constraints for the Ground Mission Segment, this which will again allow the reuse of COTS and standard HW.
- It allows moving to SBAS systems, whenever there are requirements of safety of life or integrity, and/or high performance requirements. As SBAS systems have already been developed they can be reused with a minimum redesign minimising consequently the costs.

With the regional navigation system of the present invention it is possible to provide high navigation performances with a reduced number of satellites. With only four "new" satellites, it is possible to cover small and medium size regions.

### Brief description of the drawings

While the invention will be described in conjunction with the preferred embodiments, it will be understood hat they are not intended to limit the invention to these embodiments.

Figure 1 gives an indication of the number of satellites needed for providing navigation performances world-wide.

Figure 2 shows the ground track described by a potential constellation optimised over Europe.

Figure 3 shows the minimum number of satellites in view for the constellation of the European region (shown in Figure 2).

Figure 4 illustrates the performance of the regional navigation system of the invention deployed for Europe, in terms of HDOP (Horizontal Dilution of Precision).

Figure 5 shows the same performance index (HDOP) over Europe with the nominal GPS constellation (24 satellites).

Figure 6 shows the same performance index (HDOP) over Europe when combining GPS with the regional constellation of the present invention.

Figure 7 shows the ground track described by a constellation optimised over Korea.

Figure 8 illustrates the performance of the case of Korea, in terms of HDOP.

Figure 9 illustrates the performance, in terms of HDOP, in the case when the constellations for Europe and Korea (represented in fig. 2 and 7, respectively) are combined.

Figure 10 shows the ground track described by a constellation optimised over a region covering Australia and New Zealand.

Figure 11 illustrates the performance of the case of Australia and New Zealand, in terms of HDOP.

Figure 12 shows the minimum number of satellites in view for the constellation of the Australia & New Zealand region (shown in Figure 10).

Figure 13 illustrates the performance in the case of Australia and New Zealand, in terms of HDOP, considering more difficult visibility conditions.

Figure 14 represents the HDOP that can be achieved for a 99% availability in the case of Australia & New Zealand, considering up to three satellite failures.

Figure 15 shows the availability of an HDOP of 5, again considering up to three satellite failures in the case of Australia & New Zealand.

### Detailed description of the preferred embodiments

Reference will now be made in detail to various examples of regional navigation systems according to preferred embodiments of the present invention.

A first study has been conducted with the objective of obtaining the maximum level of navigation performances with a very reduced number of satellites for the region of Europe. Once the region of interest has been selected (Europe in this case), the next step is to find the optimum constellation to provide navigation performances over that region. The optimum constellation is defined here as the constellation maximising the navigation performances with the lowest possible cost. To find this optimum constellation an optimisation process is followed in each case.

Figure 2 shows a plot of the ground track described by a potential constellation optimised over Europe.

For this particular case of the region of Europe, the constellation is composed of two classical geostationary satellites. It is not necessary to launch two dedicated geosynchronous satellites for this purpose, and some existing ones can be used. In the case of using existing geostationary earth orbits (GEO) satellites, this must be considered in the optimisation process as the location of the existing GEOs may condition the optimisation process. And, in addition to the two classical GEO satellites, there are another four satellites in geosynchronous eccentric and inclined orbits (GEIO) in two orbital planes. The eccentricity is about 0.8 and the inclination is about 76.5 degrees, while the argument of perigee is -90 degrees. Satellites are most of the time over the northern hemisphere. Then, only four new satellites have to be deployed.

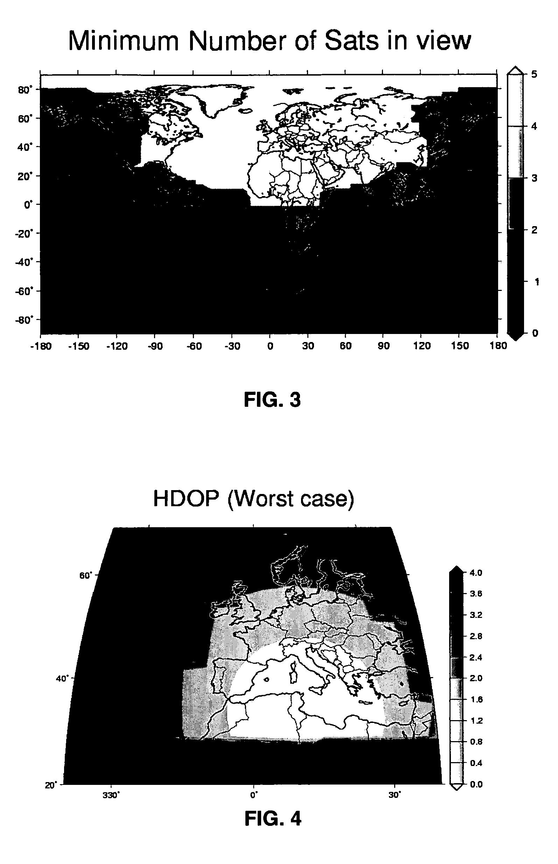

Figure 3 shows the minimum number of satellites in view for this constellation for the European region, for a masking angle of 5 degrees and assuming no satellite failures. As it can be seen, at least five satellites are in view over most of Europe allowing navigation using this system, with only four new additional satellites.

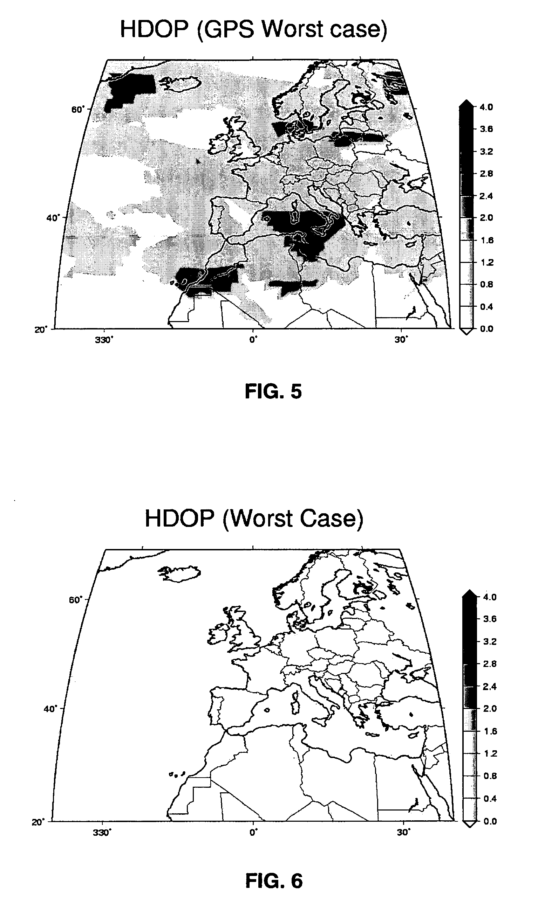

Then figure 4 illustrates the performance of this system in terms of HDOP (Horizontal Dilution of Precision). As shown, performances are rather good over most of Europe.

Just for comparison purposes, figure 5 shows the same performance index (HDOP) that can be achieved over Europe with the nominal GPS constellation (24 satellites). As it may be seen, the level of performances achieved is quite similar over the region of interest; even in some cases the regional constellation provides better performances.

Finally figure 6 shows the improvement in performances that can be achieved when combining GPS with the regional constellation. In this case, the GEIO constellation has been used as an augmentation to GPS. As it can be observed, a remarkable improvement is obtained by combining the two systems, being the HDOP reduced by a factor of two more or less.

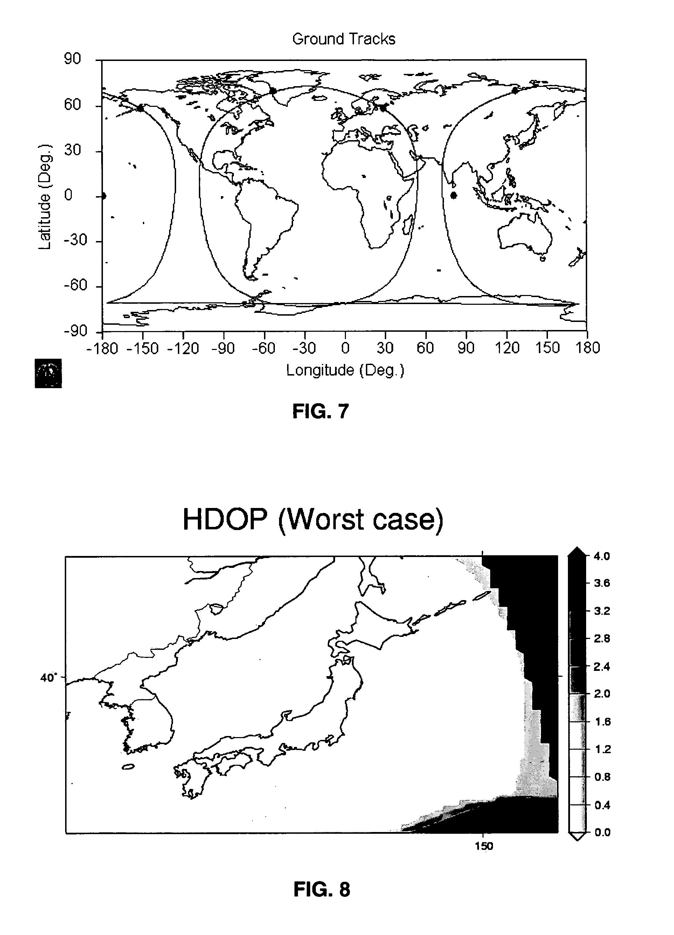

A similar exercise than the one in Europe has been carried out to optimise a regional constellation for other regions. The selected region for the following example is Korea, a region significantly smaller than Europe. In this case the regional constellation has been optimised to provide the best geometrical performances over Korea. As Korea represents a fairly small region, a larger region has been selected for the optimisation: between 120 and 135 degrees longitude and 27 and 42 degrees latitude. This penalises the performances over Korea, but ensures that small deviations from the nominal orbits do not degrade significantly the performances. The optimised constellation for Korea is shown in figure 7.

As for the European case, four satellites in GEIO orbits and two geostationary satellites compose the regional constellation. The GEIO constellation has been optimised to provide the best navigation performances according to some predefined criteria (geometrical performances, visibility in urban environments, tolerance to satellite failures, etc.). There are four satellites in two orbital planes with an inclination of about 73 degrees and an eccentricity of about 0.8. The very high eccentricity allows increasing the performances over the northern hemisphere.

In this case, the performance achieved in terms of HDOP is shown in figure 8.

Comparing the performances achieved over Korea with the regional constellation with the performances achieved over Europe, it can be observed that much better performances are obtained over Korea. This is basically because a smaller area is being covered with the same number of satellites. This can obviously be adjusted by changing the optimisation criteria.

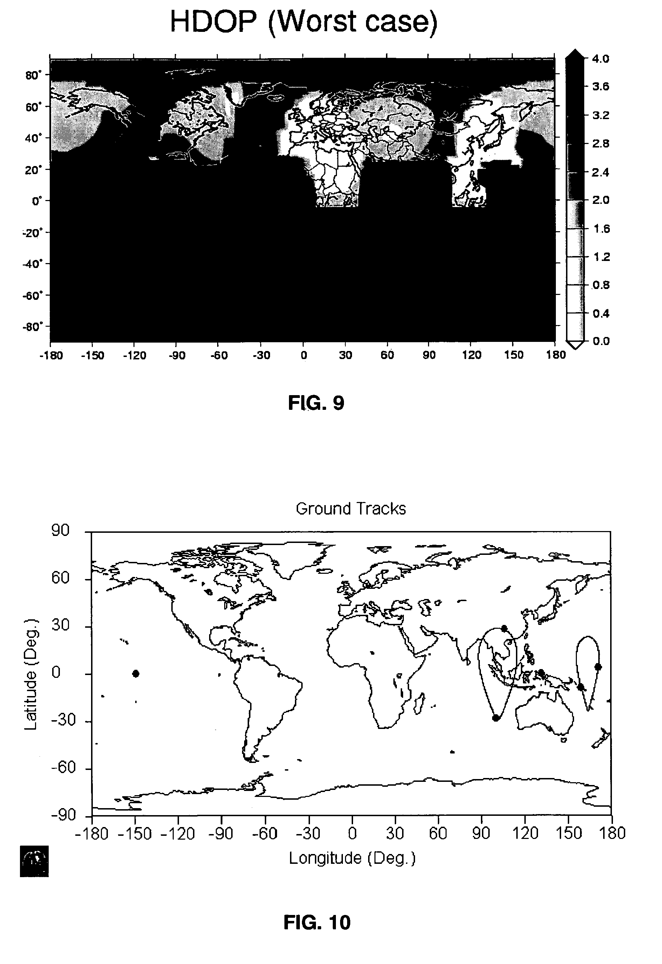

The following example analyses the performances provided by the two regional constellations used before, the European and the Korean regional constellations. For such a "combination" case, the performance achieved in terms of HDOP is shown in figure 9. The combination of the two constellations significantly increases the coverage area, and in particular a significant improvement is achieved over Europe.

In yet a further example of the invention, a detailed analysis has been performed for a region covering Australia and New Zealand. In this analysis the main target has been again to provide navigation performances autonomously with a reduced number of satellites. In this case, the target is six satellites, two of them in geostationary orbits.

In this case the optimisation process is more complex than in previous cases as it considers several aspects, such us:
- Horizontal positioning accuracy under nominal conditions.
- Horizontal positioning accuracy in difficult visibility environments (i.e. urban canyons).
- Availability of performances when considering satellite failures.

The resulting constellation in this case is composed by:
- two satellites in geostationary orbits;
- two satellites in GEIO orbits with an inclination of about 29 degrees and an eccentricity of about 0.1;
- and, two satellites in GEIO orbit with an inclination of about 23,5 degrees and an eccentricity of about 0.06.

The ground track for such a constellation covering Australia and New Zealand is shown in figure 10.

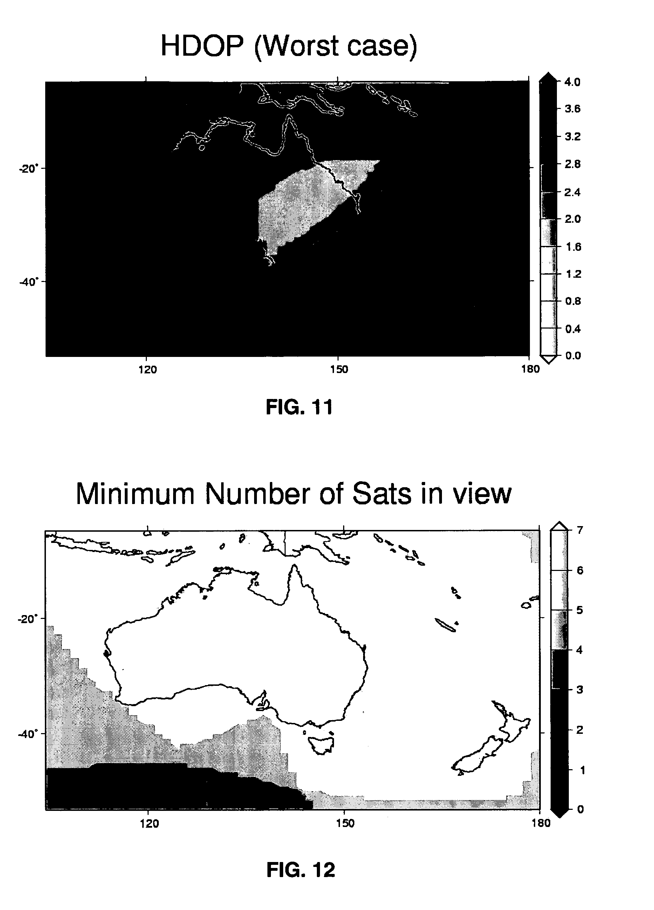

The performances under nominal conditions, in terms of HDOP, provided by this constellation are summarised in figure 11. It can be observed in figure 11 the goodness of the optimisation process and the level of performances achieved over the area of interest, being the HDOP always better than 1.5 to 3 over the regions of interest.

Figure 12 shows the minimum number of satellites in view under nominal configuration (all satellites working). It can be observed that at least five satellites are always visible over the area of interest (Australia + New Zealand). The ground segment can be significantly optimised as there is a quite large area in where all satellites are permanently in view. In theory, with only one ground station it would be possible to have a permanent contact with all satellites. Additional stations may be required for redundancy and orbitography.

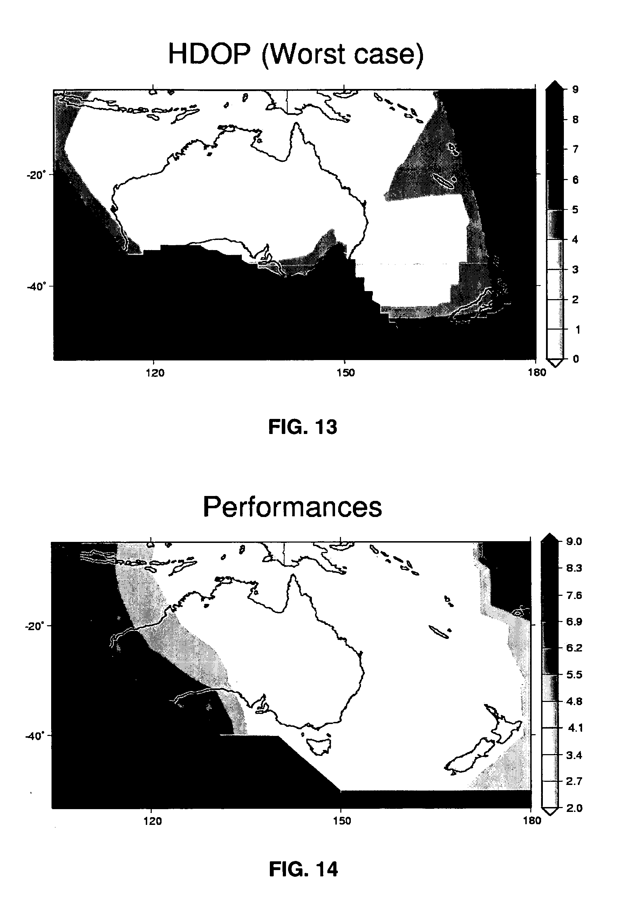

Performances have also been computed for more difficult visibility conditions. For this study, a masking angle of 15 degrees (instead of 5 degrees) has been considered, and the results obtained are summarised in figure 13. Anyway, navigation performances can be achieved over the area of interest.

Figure 14 represents the HDOP than can be achieved for a 99% availability, considering that there are up to three satellite failures. This figure shows that even considering satellite failures (maintenance, short failures and/or long failures...) acceptable performances can be achieved over the region of interest.

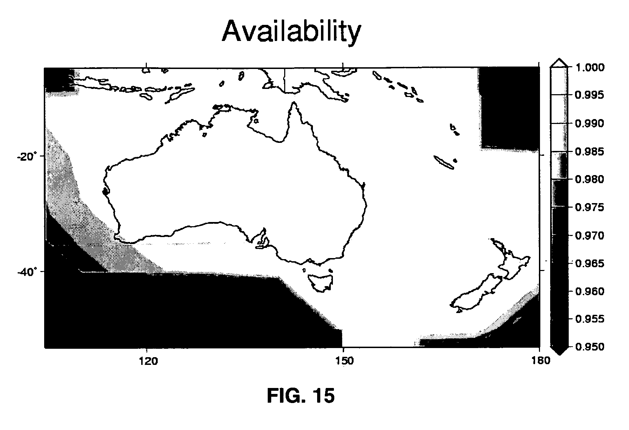

Finally, figure 15 shows the availability of an HDOP of 5, again considering up to three satellite failures. As it can be seen in this figure 15, the availability of an HDOP better than 5 is higher than 99% over most of the areas of interest.

This example covering Australia and New Zealand clearly indicates that it is possible to provide navigation performances over a relatively large region with a very reduced number of satellites, using satellites in GEIO orbits.

The foregoing descriptions of specific embodiments of the present invention have been presented for purposes of illustration and description. They are not intended to be exhaustive of to limit the invention to the precise forms disclosed, and obviously many modifications and variations are possible in light of the above teaching. The embodiments were chosen as described in order best to explain the principles of the invention and its practical application, thereby to enable others skilled in the art best to utilize the invention and various embodiments with various modifications as are suited to the particular use contemplated. It is intended that the scope of the invention be defined by the Claims appended hereto and their equivalents. All variations and modifications which are obvious to those skilled in the art to which the present invention pertains are considered to be within the scope of the protection of the present invention.

## Claims

1. Autonomous low-cost regional navigation satellite system for providing a navigation satellite system in a predetermined region; **characterised in that** the system comprises:
- at least six satellites in geosynchronous eccentric and inclined orbits,
- said geosynchronous eccentric and inclined orbits having:
- a semi major axis of around 42165 km;
- an eccentricity between 0 and 0.846;
- an inclination between -90 degrees and 90 degrees;
- an argument of perigee between 0 and 360 degrees.

2. Autonomous low-cost regional navigation satellite system according to claim 1, wherein the system is configured to use the same signal characteristics and frequencies as existing systems such as GPS, GLONASS and Galileo.

3. Autonomous low-cost regional navigation satellite system according to any preceding claim, wherein the system is interoperable with other global or regional navigation satellite systems, thereby allowing improved performance over the region of interest.

4. Autonomous low-cost regional navigation satellite system according to any preceding claim, wherein Integrity and Safety Critical Services are provided by complementing the system with Satellite Based Augmentation Systems, like EGNOS or WAAS.

5. Autonomous low-cost regional navigation satellite system according to any of claims 1-4, wherein said geosynchronous eccentric and inclined orbits have an eccentricity between 0.6 and 0.8, an inclination between 60 and 76.5 degrees and an argument of perigee of -90°.

6. Autonomous low-cost regional navigation satellite system according to any of claims 1-4, wherein said geosynchronous eccentric and inclined orbits have an eccentricity between 0.6 and 0.8 and an inclination between 60 and 73 degrees.

7. Autonomous low-cost regional navigation satellite system according to any of claims 1-4, wherein one of said geosynchronous eccentric and inclined orbits has an eccentricity between 0.1 and 0.3 and an inclination between 29 and 65 degrees, and the other geosynchronous eccentric and inclined orbit has an eccentricity between 0.06 and 0.3 and an inclination between 23.5 and 65 degrees.
